# EUROPEAN PATENT SPECIFICATION

(11) **EP 4 272 583 B1**
(45) Date of publication and mention of the grant of the patent: **21.05.2025**
(21) Application number: 22862400.3
(22) Date of filing: 14.06.2022
(51) Int. Cl.: A24D 1/20

(54) **SNAP-SEAL PARTICULATE AEROSOL-GENERATING ARTICLE**
PARTIKELFÖRMIGER AEROSOLERZEUGUNGSARTIKEL MIT SCHNAPPVERSCHLUSS
ARTICLE DE GÉNÉRATION D'AÉROSOL PARTICULAIRE À JONCTION ÉTANCHE INSTANTANÉE

(30) Priority: 15.03.2022 CN 202210253922
(43) Date of publication of application: 08.11.2023
(73) Proprietor: CHINA TOBACCO YUNNAN INDUSTRIAL CO., LTD, Wuhua District Kunming Yunnan 650231 (CN)
(72) Inventor: ZHAO, Yang, Kunming, Yunnan 650231 (CN); GONG, Xiaowei, Kunming, Yunnan 650231 (CN); HAN, Yi, Kunming, Yunnan 650231 (CN); GUO, Dingrong, Kunming, Yunnan 650231 (CN); LI, Zhiqiang, Kunming, Yunnan 650231 (CN); ZHU, Ruizhi, Kunming, Yunnan 650231 (CN); ZHANG, Zilong, Kunming, Yunnan 650231 (CN); CHEN, Jinxiong, Kunming, Yunnan 650231 (CN); DUAN, Yuanxing, Kunming, Yunnan 650231 (CN); SHEN, Qinpeng, Kunming, Yunnan 650231 (CN); LI, Xuemei, Kunming, Yunnan 650231 (CN); ZHAO, Wei, Kunming, Yunnan 650231 (CN); XIANG, Nengjun, Kunming, Yunnan 650231 (CN); LIU, Lingxuan, Kunming, Yunnan 650231 (CN)
(74) Representative: Gille Hrabal Partnerschaftsgesellschaft mbB Patentanwälte
(86) International application number: PCT/CN2022/098568
(87) International publication number: WO 2023/173607

(56) References cited:
- WO-A1-2018/206616
- WO-A1-2020/202257
- CN-A- 109 965 366
- CN-A- 109 965 366
- CN-A- 112 469 291
- CN-A- 112 754 075
- CN-A- 113 662 239
- CN-A- 113 925 197
- CN-A- 114 568 743
- CN-U- 210 275 873
- CN-U- 210 275 873
- CN-U- 212 697 654
- CN-U- 213 848 760
- US-A1- 2022 030 934

## Description

### TECHNICAL FIELD

The present disclosure belongs to the technical field of aerosol generating product, and in particular, to an aerosol generating product by using aerosol source-material granules, and more specifically, to a sealing-type granular aerosol generating product.

### BACKGROUND

Aerosol granular generating products are a new type of Heat-Not-Burn (HNB) aerosol generating products in recent years, using aerosol source-material granules instead of aerosol source-material flakes as aerosol generating materials, as aerosol source-material granules are heated more evenly than aerosol source-material flakes, and aerosols diffuse more smoothly along the gap among granules than that among flake materials, they are deeply welcomed by consumers.

CN 109965366 A discloses a heat-not-burn cigarette. The cigarette includes a cylindrical package, a cigarette core element, a smoke circulation element and a filter element, wherein the cigarette core element, a smoke circulation element and a filter element are sequentially arranged inside the cylindrical package; a plurality of smoke passages are formed in the smoke circulation element; the smokecirculation element is spaced from the filter element, and the heat-not-burn cigarette further includes a first hollow part arranged between the smoke circulation element and the filter element. The heat-not-burn cigarette has the advantages that the smoke amount is large, and the temperature of smoke in the mouth is low.

CN21075873 U discloses a heated non combustible cigarette, which sequentially comprises: an aerosol generation section (1), a support element (2), a cooling section (3), and a filter section (4); The supporting element (2) is an empty tube with a tube wall (21) and a tube lumen (22), wherein the tube wall (21) comprises an outer wrapping layer (211) and a groove corrugated layer (213), and the groove corrugated layer (213) is close to the tube lumen (22). The pipe wall (21) of the support element (2) described in this utility model can bounce back after being cut by a knife, and the support element (2) has high adaptability to the machine, improving the production efficiency and product quality of cigarettes. At the same time, the support element (2) described in this utility model is not prone to collapse, and has high support performance for cigarettes.

US 2022/0309341 discloses a feature that, during storage of a heated tobacco product having a tobacco rod formed by filling the inside of wrapping paper with a tobacco filler containing a tobacco raw material and an aerosol-source material, suppresses occlusion of a heater-insertion cavity open on the distal end surface side of the tobacco rod. This heated tobacco product has a tobacco rod formed by filling the inside of wrapping paper with a tobacco filler containing cut tobacco and an aerosol-source material, and is provided with: a heater-insertion cavity that is open on the distal end surface side of the tobacco rod and extends in the axial direction of the tobacco rod, and into which a heater of a heating device is inserted; and a coating layer that is formed on the lateral periphery of the heater-insertion cavity of the tobacco rod, and suppresses occlusion of the heater-insertion cavity.

CN113662239 A according to its abstract discloses an aerosol generating product with a perfumed cigarette core section. The aerosol generating product comprises a fuming core material section, a supporting section, a breathable hollow section and a filtering section which are arranged in sequence. The supporting section has a perfuming function and is provided with a large hollow hole and a plurality of small perfuming holes; the multiple small perfuming holes surround the outer side of the large hollow hole, and perfuming capsules are arranged at the ends of the sides, close to the fuming core material section, in part of the small perfuming holes; an impermeable layer is arranged in forming paper; and ventilation holes penetrating through the ventilation hollow section in the radial direction are formed in the ventilation hollow section.

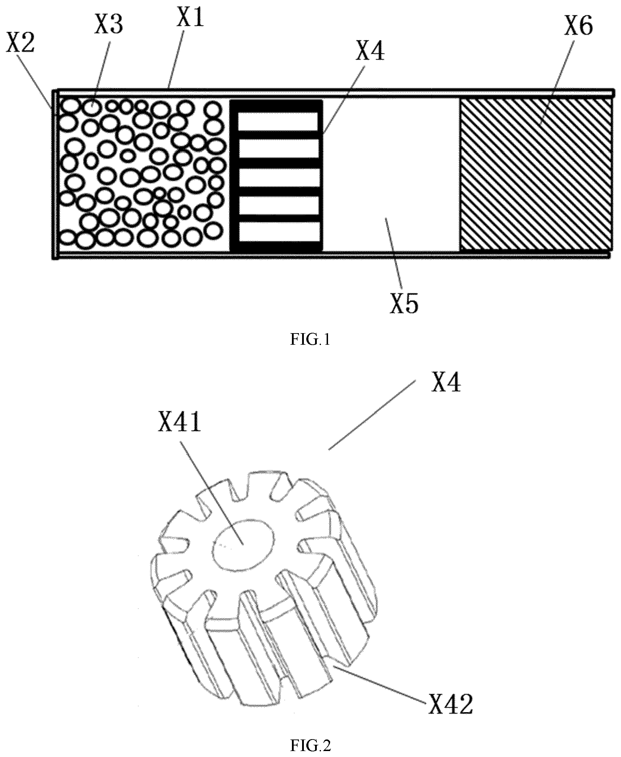

Granular aerosol generating products are known on the market, the structure is illustrated with reference to FIG.1: the main structure is an integrated outer sleeve X1, the distal lip is sealed by the sealing film X2, which is filled with aerosol source-material granules X3 to form a granule section, a multi-hole firmware section (commonly known as "gear") X4 is set in the downstream of the granule section, and an airflow channel section X5 is set aside for collecting and accommodating aerosol (the airflow channel section X5 is either a separate cavity or a hollow rod), the downstream of the airflow channel section X5 is a filtering section X6, which is also used as a cigarette holder for users to take in their mouths. When using aerosol generating products, the distal lip end is inserted into the heating appliance, the heating appliance has a heating element to heat aerosol source-material granules so as to release gaseous aroma components, gaseous aroma components in the airflow channel section X5 are condensed into visible aerosol by cold air, and the aerosol is filtered through the filtering section and enters users' mouths.

Wherein, the airflow channel section X5 is crucial for aerosol formation, according to scientific theories of aerosol, gaseous aroma components released by heat need to be cooled and condense into solid or liquid granules, such solid or liquid granules need to be suspended in the air to form visible aerosol (commonly known as "smoke" or "fog" or generally known as "smog"). Thus, the airflow channel section X5 must be left in the existing granular aerosol generating products.

Besides, as granules are loose and fluid, if they are not constrained, such granules may inevitably flow to the downstream of the airflow channel section X5 on a large scale when the aerosol generating products are placed horizontally or inverted, resulting in huge reduction of granules that can be directly heated by the heating element, the amount of aroma components and subsequent aerosol released may decrease; in order to ensure that granules are fully heated, granules must be confined in a limited space near the heating element. Such constraint is currently achieved by setting a sealing film X2 in the upstream of the granule section and providing a multi-hole firmware section X4 in the downstream of the particle section, so that granules may not flow everywhere with constraints at both ends.

Wherein, the sealing film X2 is usually a high-permeability thin paper, it is pasted to the upstream end face of the outer sleeve X1 by bonding; however, the bonding process of the sealing film X2 is complex and inefficient, requiring special bonding sealing film equipment. Besides, due to the fact that the outer sleeve X1 end face is not in the same plane, which has burrs and defects on thin paper surface as well as uneven gluing, etc., the sealing film is not reliable, thus the sealing film sealing the lips of cigarettes is degummed in subsequent production processes, resulting in leakage of internal storage granule material, which not only pollutes production environment, but causes loss of other materials and affects production efficiency. Current granular heating cigarette is made by sealing the film and filling granules. There are problems of low degree of automation, low success rate of sealing (also hard to detect), and low production efficiency of cigarettes. During use, the sealing film is pierced for heating, and granules are sprinkled out after cigarettes are pulled out of smoking sets, making it difficult to clean smoking sets.

Wherein the multi-hole firmware section X4 is usually made of ceramic or silica gel, the outer wall is firmly bonded to the inner wall of the paper cylinder by adhesive, there is at least one axial through-hole X41 in the center and/or at least one peripheral ventilation groove X42 on the periphery, their sizes can allow smog while not allowing aerosol source-material granules to pass through; thus, blocking aerosol source-material granules and transmitting flue gas can be realized. However, the existence of multi-hole firmware section brings more costs and operational inconveniences to industrial manufacturing of granular aerosol generating products, thus, those skilled in the art have been hoping to eliminate the multi-hole firmware section. However, once eliminating the multi-hole firmware section, the airflow channel section must be set in the downstream of the granule section to gather and accommodate aerosols, and the section can also constrain scattered aerosol source-material granules, resulting in a dilemma.

Thus, eliminating the sealing film and the multi-hole firmware section as well as constraining scattered aerosol source-material granules, while ensuring that the aerosol generated can be successfully sent to the filtering section are urgent problems to be solved.

The present disclosure aims to solve the problems above.

### SUMMARY

The present disclosure provides a sealing-type granular aerosol generating product, which includes a filtering component 1, a groove corrugated component 2, an aerosol source-material granule 3 and a sealing component 4 arranged in turn from the proximal to the distal lip end, an outer sleeve 5 is provided outside each component;

The groove corrugated component 2 is a cylinder with a hollow cavity 22 surrounded by the first sheet of a groove corrugated structure 21, a first airflow channel 23 that axially penetrates the groove corrugated structure 21 forms between the groove corrugated structure 21 and the outer tube 5, a plugging part 24 is provided inside the hollow cavity 22.

Preferably, the shape of the groove in the groove corrugated structure 21 is selected from, but not limited to the "V" type or the "U" type.

The upstream and downstream mentioned in the present disclosure are determined by the direction of gas flow. More specifically, the distal lip end is upstream and the proximal lip end is downstream.

In present disclosure, the arrangement in turn is not limited to close connection of the two, but only limitation of the order. That is to say, other forms of units can be inserted between any of the filtering component 1, the groove corrugated component 2, the aerosol source-material granule 3 and the sealing component 4.

Preferably, the sealing component 4 is a truncated cone-shaped hollow structure with
manufacturing of granular aerosol generating products, thus, those skilled in the art have been hoping to eliminate the multi-hole firmware section. However, once eliminating the multi-hole firmware section, the airflow channel section must be set in the downstream of the granule section to gather and accommodate aerosols, and the section can also constrain scattered aerosol source-material granules, resulting in a dilemma.

Thus, eliminating the sealing film and the multi-hole firmware section as well as constraining scattered aerosol source-material granules, while ensuring that the aerosol generated can be successfully sent to the filtering section are urgent problems to be solved.

The present disclosure aims to solve the problems above.

### SUMMARY

The present disclosure provides a sealing-type granular aerosol generating product as defined in the appended claims. The aerosol generating product includes a filtering component 1, a groove corrugated component 2, an aerosol source-material granule 3 and a sealing component 4 arranged in turn from the proximal to the distal lip end, an outer sleeve 5 is provided outside each component;

The groove corrugated component 2 is a cylinder with a hollow cavity 22 surrounded by the first sheet of a groove corrugated structure 21, a first airflow channel 23 that axially penetrates the groove corrugated structure 21 forms between the groove corrugated structure 21 and the outer tube 5, a plugging part 24 is provided inside the hollow cavity 22.

Preferably, the shape of the groove in the groove corrugated structure 21 is selected from, but not limited to the "V" type or the "U" type.

The upstream and downstream mentioned in the present disclosure are determined by the direction of gas flow. More specifically, the distal lip end is upstream and the proximal lip end is downstream.

In present disclosure, the arrangement in turn is not limited to close connection of the two, but only limitation of the order. That is to say, other forms of units can be inserted between any of the filtering component 1, the groove corrugated component 2, the aerosol source-material granule 3 and the sealing component 4.

The sealing component 4 is a truncated cone-shaped hollow structure with a top surface of 41 and a bottom surface with an opening of 42. As the sealing component 4 is a truncated cone, diameter of the bottom is larger than that of the top; as it has no bottom (bottom is open), there is no bottom constraint on the side near the bottom, which can further add flavor to the aerosol passed through and improve aerosol quality.

At the other end of the aerosol generating product, the sealing component 4 is directly used to constrain aerosol source-material granules, the sealing component 4 can be directly loaded into the outer tube 5 in the form of filling or compounding without using sealing-film bonding equipment, to avoid the problem that the sealing film is not firmly bonded and easy to fall off. Besides, as the sealing component 4 is a truncated cone, diameter of the bottom is larger than that of the top, it has no bottom (bottom is open), there is no bottom constraint on the side near the bottom, which may naturally expand towards both sides, thereby increasing friction at the contact between the sealing component 4 and the inner wall of the outer tube 5, to ensure that the sealing component 4 is more secure inside the outer tube 5.

Preferably, an inner tube 25 is also disposed inside the hollow cavity 22, and the plugging part 24 is located inside the inner tube 25. The inner tube 25 can prevent the plugging part 24 from directly contacting the groove corrugated component 2.

The plugging part 24 is a bead, and the gap in the hollow cavity 22 without filling the bead forms a second airflow channel 26. The first airflow channel 23 and the second airflow channel 26 work together to gather and accommodate aerosols, and ensure that the generated aerosols can be smoothly sent to the filtering section.

The radial size of the smallest granule of the aerosol source-material granule 3 is larger than the longest radial distance in the second airflow channel 26, so that the aerosol source-material granule 3 does not fall into the groove corrugated component 2 through the second airflow channel 26.

Preferably, the bead is one or a plurality of flavoring bead(s). during smoking, beads are automatically ruptured by heating or manually crushed by consumers to release aroma substances within. Even though beads rupture may weaken plugging of aerosol source-material granules, which has no influence on the cigarette in general, as consumers usually bow their heads or look horizontally during smoking, no one may raise their heads and lift aerosol generating products, thus it is necessary to ensure constraint on aerosol source materials during transportation and storage. Besides, an accidental effect of the present disclosure is that, beads can constrain aerosol source materials during transportation and storage; during smoking, beads rupture and the second airflow channel 26 becomes larger, which can increase capacity of accommodating aerosol, thereby increasing the amount of smoke.

Preferably, the outer tube 5 is made of a permeable material, e.g., permeable forming paper, ambient air can enter the groove corrugated component 2, the aerosol source-material granule 3 and the sealing component 4 through the outer tube 5.

Preferably, a first side-flow vent-hole 51 is provided on the outer tube 5 wrapping the sealing component 4, there is(are) one and a plurality of the first side-flow vent-hole(s) 51, the first side-flow vent-hole 51 can further add air from the side. The sealing component 4 can be permeable or impermeable. When it is permeable, air can enter the aerosol source-material granule 3 through the upstream end face of the aerosol generating product. At this time, preferably, there is a first side-flow vent-hole 51, when the sealing component 4 is impermeable, the first side-flow vent-hole 51 must add air from the side.

Preferably, a second side-flow vent-hole 52 is provided on the outer tube 5 of the groove corrugated component 2, there is(are) one and a plurality of second side-flow vent-hole(s) 52 to further add air to the groove corrugated component 2.

In other words, the outer tube 5 can be made of a permeable or an impermeable material. When it is made of a permeable material, air can be introduced into the outer tube 5 with its own permeability. When it is made of an impermeable material, air can be introduced into the outer tube 5 by punching the outer tube 5. E.g., as mentioned above, a first side-flow vent-hole 51 is provided on the outer tube 5 of the sealing component 4, or the second side-flow vent-hole 52 is provided on the outer tube 5 of the groove corrugated component 2.

Preferably, the radial size of the smallest granule of the aerosol source-material granule 3 is larger than the longest radial distance in the first airflow channel 23, so that the aerosol source-material granule 3 does not fall into the groove corrugated component 2 through the first airflow channel 23.

Preferably, the first sheet is selected from, but not limited to paper, polylactic acid sheet or cellulose acetate; the sealing component 4 is selected from paper, polylactic acid sheet or cellulose acetate.

The aerosol generating products in the present disclosure are more preferably suitable for circumferential resistance heating and electromagnetic heating smoking sets. When circumferential resistance heating smoking sets are used, it is only necessary to place the heating cylinder (heating element) axially on the outside of the aerosol source-material granule 3. When electromagnetic heating smoking sets are used, it is only necessary to place the receptor that can receive from the magnetic field axially on the outside of the aerosol source-material granule 3, or set it to the aerosol source-material granule 3, or more simply, set the receptor material directly on the outer tube 5 wrapping the aerosol source-material granule 3.

Technical solutions above can be combined freely without contradiction.

The present disclosure has the following beneficial effects:
1. Eliminating multi-hole firmware section and the sealing film, while still constraining granules at both ends by the groove corrugated component 2 and the sealing component 4, the present disclosure combines the groove corrugated component with bulk aerosol source-material granules for the first time, as a plugging part 24 is provided in the hollow cavity 22 of the groove corrugated component, which can constrain aerosol source-material granules without using multi-hole firmware. At the other end, the sealing component 4 is directly used to constrain aerosol source-material granules, the sealing component 4 can be directly loaded into the outer tube 5 in the form of filling or compounding, without using sealing-film bonding equipment, to avoid the problem that the sealing-film is not firmly bonded and falls off. Besides, as the sealing component 4 is a truncated cone, diameter of the bottom is larger than that of the top, as it has no bottom (bottom is open), there is no bottom constraint on the side near the bottom surface, which may naturally expand towards both sides, thereby increasing friction at the contact between the sealing component 4 and the inner wall of the outer tube 5, to ensure that the sealing component 4 is more secure inside the outer tube 5.
2. In case the plugging part 24 is a flavoring bead, it can further add flavor to the aerosol passed through and improve aerosol quality.
3. In case of non-smoking, the bead can constrain aerosol source materials during transportation and storage; during smoking, the bead breaks, the second airflow channel 26 becomes larger, which can increase capacity of accommodating aerosol, thereby increasing the amount of smoke.
4. In the preferred embodiment of the present disclosure, a first side-flow vent-hole 51 is provided on the outer tube 5 wrapping the sealing component 4, there is(are) one and a plurality of the first side-flow vent-hole(s) 51, the first side-flow vent-hole 51 can further add air from the side. A second side-flow vent-hole 52 is provided on the outer tube 5 of the groove corrugated component 2, there is(are) one and a plurality of second side-flow vent-hole(s) 52 to further add air to the groove corrugated component 2.
5. The aerosol generating products in the present disclosure are more preferably suitable for circumferential resistance heating and electromagnetic heating smoking sets. When circumferential resistance heating smoking sets are used, it is only necessary to place the heating cylinder (heating element) axially on the outside of the aerosol source-material granule 3. When electromagnetic heating smoking sets are used, it is only necessary to place the receptor that can receive from the magnetic field axially on the outside of the aerosol source-material granule 3, or set it to the aerosol source-material granule 3, or more simply, set the receptor material directly on the outer tube 5 wrapping the aerosol source-material granule 3. The present disclosure greatly improves production efficiency. By means of circumferential or electromagnetic heating, granules are avoided from scattering into smoking sets and cleaning of smoking sets.

### DRAWINGS OF THE DESCRIPTION

FIG.1 is a structural schematic view of granular aerosol generating products in the prior art.
FIG.2 is a three-dimensional schematic view of multi-hole firmware section in granular aerosol generating products in the prior art.
FIG.3 is a structural schematic view of the sealing-type granular aerosol generating product of the present disclosure.
FIG.4 is a structural schematic view of the sealing-type granular aerosol generating product of the present disclosure with another structure.
FIG.5 is a structural schematic view of the sealing-type granular aerosol generating product of the present disclosure with still another structure.
FIG.6 is a structural schematic view of the groove corrugated component of the present disclosure.
FIG.7 is a structural schematic view of the groove corrugated component of the present disclosure with another structure.
FIG. 8 is a structural schematic view of the sealing component 4 of the present disclosure.

### List of the reference signs of figures:

In FIGS1-2: X1-Outer sleeve, X2-Sealing film, X3-Aerosol source-material granules, X4-Multi-hole firmware section, X5-Airflow channel section, X6-Filtering section, X41-Axial through hole, X42-Peripheral ventilation groove;

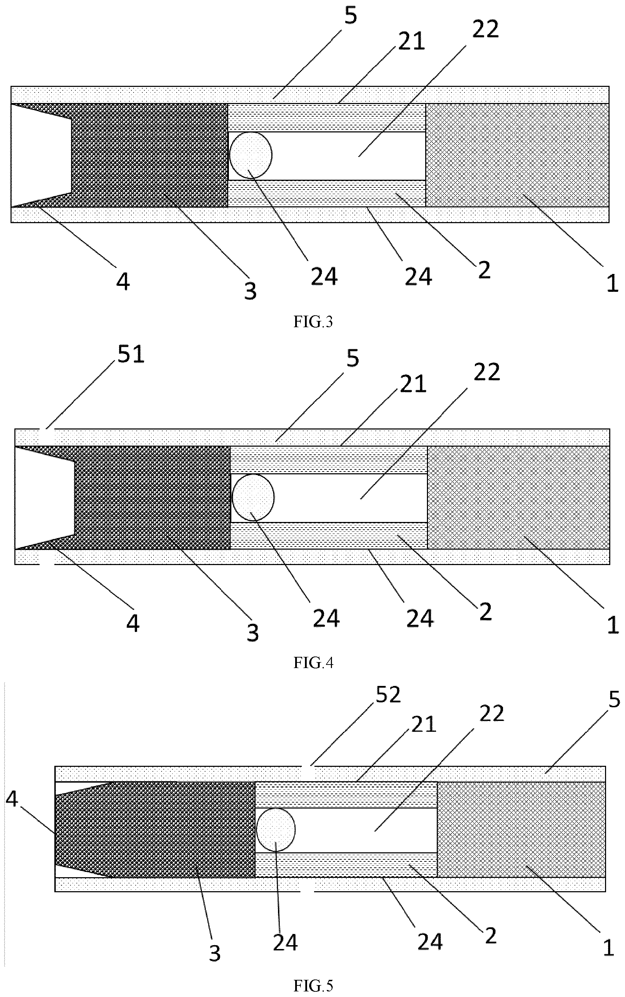

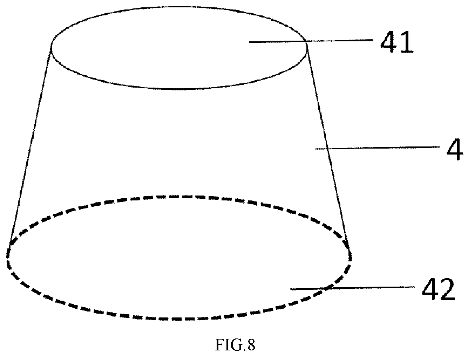

In FIGS3-8: 1-Filtering component, 2-Groove corrugated component, 21-Groove corrugated structure, 22-Hollow cavity, 23-First airflow channel, 24-Plugging part, 25-Inner tube, 26-Second airflow channel, 3-Aerosol source-material granule, 4-Sealing component, 41-Top surface, 42-Opening, 5-Outer tube, 51-First side-flow vent-hole, 52-Second side-flow vent-hole.

### DETAILED DESCRIPTION OF THE EMBODIMENTS

The present disclosure is further illustrated through specific embodiment.

It is understood by those skilled in the art that, the following embodiment is only for illustrating the present disclosure and should not be interpreted as limiting the scope of the present disclosure. In case no specific technique or condition is indicated in the embodiment, the technique or condition described in the literature in the field or the product specification is based on. In case the materials or equipment used are not indicated with manufacturers, they are all ordinary products that can be obtained through purchase.

It can be understood by those skilled in the art that, the singular forms "a", "an" and "the" used herein can include the plural forms as well, unless expressly stated otherwise. It should be further understood that "including" used in the description of the present disclosure means that the features, integers, steps, operations, elements and/or components exist; however, the existence or addition of one or more other features, integers, steps, operations, elements, components and/or groups thereof is not excluded. It should be understood that, when an element is referred to be "connected" to another one, it may be directly connected to another element, or there may be intermediate elements as well. Moreover, "connection" as used herein may include wireless connections.

In the description of the present disclosure, unless otherwise stated, "a plurality of" means two or more. The orientation or state relationship indicated by the terms "inside", "above", "below", etc. is based on that shown in the figures, which is only for convenience of describing the present disclosure and simplifying description, rather than indicating or implying that the device or element must have a particular orientation, or must be constructed and operated in a particular orientation, and thus should not be interpreted as limitations of the present disclosure.

In the description of the present disclosure, it should be noted that, the terms "mount", "connect" and "provided with" should be interpreted broadly unless otherwise expressly specified and defined, such as fixed connection, detachable connection, or integral connection; either mechanical connection or electrical connection; direct connection or indirect connection through intermediate media. The specific meanings of the terms above in the present disclosure can be understood by persons skilled in the art in actual conditions.

It is understood by those skilled in the art that, unless otherwise defined, all terms including technical and scientific terms used herein have the same meanings as commonly understood by the ordinary persons skilled in the art to the technical field to which the present disclosure belongs. It should also be understood that terms such as those defined in the general dictionary should be understood to have meanings consistent with those in the context of the prior art; moreover, unless defined as herein, the terms may not be explained with idealized or overly formal senses.

### Embodiment

As is shown in FIGS.3, 6 and 8, the embodiment provides a sealing-type granular aerosol generating product, which includes a filtering component 1, a groove corrugated component 2, an aerosol source-material granule 3 and a sealing component 4 arranged in turn from the proximal to the distal lip end, an outer sleeve 5 is provided outside each component;
The groove corrugated component 2 is a cylinder with a hollow cavity 22 surrounded by the first sheet of a groove corrugated structure 21. a first airflow channel 23 that axially penetrates the groove corrugated structure 21 forms between the groove corrugated structure 21 and the outer tube 5, a plugging part 24 is provided in the hollow cavity 22.

Wherein, the upstream and downstream mentioned are determined by the direction of gas flow. More specifically, the distal lip end is upstream and the proximal lip end is downstream.

The shape of the groove in the groove corrugated structure 21 is selected from the "V" type, the outer tube is made of paper.

The sealing component 4 is a truncated cone-shaped hollow structure, it has a top surface of 41 and a bottom surface with an opening of 42. As the sealing component 4 is a truncated cone, diameter of the bottom is larger than that of the top, it has no bottom (bottom is open), there is no bottom constraint on the side near the bottom, which may naturally expand towards both sides, thereby increasing friction at the contact between the sealing component 4 and the inner wall of the outer tube 5, to ensure that the sealing component 4 is more secure inside the outer tube 5.

The top surface 41 faces the proximal lip side.

The plugging part 24 is a bead, and the gap in the hollow cavity 22 without filling the bead forms a second airflow channel 26. The first airflow channel 23 and the second airflow channel 26 work together to gather and accommodate aerosols, and ensure that the generated aerosols can be smoothly sent to the filtering section.

The radial size of the smallest granule of the aerosol source-material granule 3 is smaller than the longest radial distance in the second airflow channel 26, so that the aerosol source-material granule 3 does not fall into the groove corrugated component 2 through the second airflow channel 26.

The bead is one flavoring bead.

The radial size of the smallest granule of the aerosol source-material granule 3 is smaller than the longest radial distance in the first airflow channel 23, so that the aerosol source-material granule 3 does not fall into the groove corrugated component 2 through the first airflow channel 23.

The first sheet is made of paper; the sealing component 4 is made of paper.

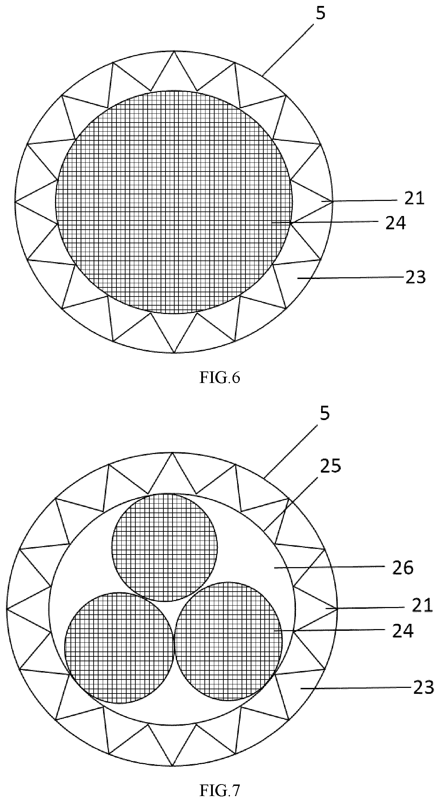

As is shown in FIG.7, an inner tube 25 is also disposed inside the hollow cavity 22, and the plugging part 24 is located inside the inner tube 25. At this time, the plugging part 24 is also a flavoring bead, but the number of the bead is three. The inner tube 25 can prevent the plugging part 24 from directly contacting the groove corrugated component 2.

As is shown in FIG.4, there is a first side-flow vent-hole 51 on the outer tube 5 wrapping the sealing component 4, the number of the first side-flow vent-hole 51 is two, while the first side-flow vent-hole 51 can add air from the side.

As is shown in FIG.5, there is a second side-flow vent-hole 52 on the outer tube 5 wrapping the groove corrugated component 2, the number of the second side-flow vent-hole 52 is two, to further add air into the groove corrugated component 2. At this time, the top surface 41 faces the distal lip side.

The aerosol generating products in the embodiment are more preferably suitable for circumferential resistance heating and electromagnetic heating smoking sets. When circumferential resistance heating smoking sets are used, it is only necessary to place the heating cylinder (heating element) axially on the outside of the aerosol source-material granule 3. When electromagnetic heating smoking sets are used, it is only necessary to place the receptor that can receive from the magnetic field axially on the outside of the aerosol source-material granule 3, or set it to the aerosol source-material granule 3, or more simply, set the receptor material directly on the outer tube 5 wrapping the aerosol source-material granule 3.

## Claims

1. A sealing-type granular aerosol generating product, the product comprises a filtering component (1), a groove corrugated component (2), an aerosol source-material granular (3) and a sealing component (4) arranged in turn from the proximal to the distal lip end, and an outer tube (5) is provided outside each component;
the groove corrugated component (2) is a cylinder with a hollow cavity (22) surrounded by the first sheet of a groove corrugated structure (21), a first airflow channel (23) that axially penetrates the groove corrugated structure (21) forms between the groove corrugated structure (21) and the outer tube (5), a plugging part (24) is provided inside the hollow cavity (22);
the sealing component (4) is a truncated cone-shaped hollow structure with a top surface (41) and an opening (42) on the bottom, wherein, the plugging part (24) is a bead, and a gap in the hollow cavity (22) without filling the bead forms a second airflow channel (26); a radial size of the smallest granule of the aerosol source-material granule (3) is larger than the longest radial distance in the second airflow channel (26), so that the aerosol source-material granule (3) does not fall into the groove corrugated component (2) through the second airflow channel (26).

2. The granular aerosol generating product of claim 1, wherein, the top surface (41) faces toward a proximal lip side or a distal lip side;
the distal lip end is upstream and the proximal lip end is downstream, wherein the upstream and the downstream are determined by the direction of gas flow.

3. The granular aerosol generating product of claim 1, wherein, an inner tube (25) is also disposed inside the hollow cavity (22), and the plugging part (24) is located inside the inner tube (25).

4. The granular aerosol generating product of claim 1, wherein, the bead(s) is/are one or a plurality of flavoring beads; the first sheet is made of paper, polylactic acid sheet or cellulose acetate; the sealing component (4) is made of paper, polylactic acid sheet or cellulose acetate.

5. The granular aerosol generating product of claim 1, wherein, the outer tube (5) is made of permeable materials, ambient air can enter the groove corrugated component (2), the aerosol source-material granule (3) and the sealing component (4) through the outer tube (5).

6. The granular aerosol generating product of claim 1, wherein, a first side-flow vent-hole (51) is provided on the outer tube (5) wrapping the sealing component (4), a plurality of first side-flow vent-holes is optional.

7. The granular aerosol generating product of claim 1, wherein, there is a second side-flow vent-hole (52) on the outer tube (5) wrapping the groove corrugated component (2), a plurality of second side-flow vent-holes is optional.

8. The granular aerosol generating product of claim 1, wherein, the radial size of the smallest granule of the aerosol source-material granule (3) is larger than the longest radial distance in the first airflow channel (23), so that the aerosol source-material granule (3) does not fall into the groove corrugated component (2) through the first airflow channel (23).

## Patentansprüche

1. Ein granulatförmiges Aerosolerzeugungsprodukt vom dichtenden Typ, wobei das Produkt eine Filterkomponente (1), ein rillengewelltes Bauteil (2), ein Aerosolquellenmaterial granulatförmig (3) und eine Dichtungskomponente (4) umfasst, die der Reihe nach vom proximalen zum distalen Lippenende angeordnet sind, und wobei außerhalb jeder Komponente ein Außenrohr (5) bereitgestellt ist;
das rillengewellte Bauteil (2) ist ein Zylinder mit einem Hohlraum (22), der von der ersten Platte einer rillengewellten Struktur (21) umgeben ist, ein erster Luftströmungskanal (23), der die rillengewellte Struktur (21) axial durchdringt, bildet sich zwischen der rillengewellten Struktur (21) und dem Außenrohr (5), ein Stopfenteil (24) ist innerhalb des Hohlraums (22) bereitgestellt;
die Dichtungskomponente (4) ist eine kegelstumpfförmige Hohlstruktur mit einer oberen Fläche (41) und einer Öffnung (42) an der Unterseite,
wobei das Stopfenteil (24) eine Kugel ist und ein Spalt in dem Hohlraum (22) ohne Füllen der Kugel einen zweiten Luftströmungskanal (26) bildet; eine radiale Größe des kleinsten Körnchens des Aerosolquellenmaterialkörnchens (3) größer ist als der längste radiale Abstand in dem zweiten Luftströmungskanal (26), so dass das Aerosolquellenmaterialkörnchen (3) nicht durch den zweiten Luftströmungskanal (26) in das rillengewellte Bauteil (2) fällt.

2. Das granulatförmige Aerosolerzeugungsprodukt nach Anspruch 1, wobei die obere Fläche (41) zu einer proximalen Lippenseite oder einer distalen Lippenseite weist;
das distale Lippenende stromaufwärts und das proximale Lippenende stromabwärts liegt, wobei stromaufwärts und stromabwärts durch die Richtung des Gasflusses bestimmt sind.

3. Das granulatförmige Aerosolerzeugungsprodukt nach Anspruch 1, wobei ein inneres Rohr (25) auch innerhalb des Hohlraums (22) angeordnet ist und das Stopfenteil (24) innerhalb des inneren Rohrs (25) angeordnet ist.

4. Das granulatförmige Aerosolerzeugungsprodukt nach Anspruch 1, wobei die Kugel(n) eine oder eine Vielzahl von aromatisierenden Kugeln ist/sind; die erste Platte aus Papier, Polymilchsäurefolie oder Celluloseacetat hergestellt ist; die Dichtungskomponente (4) aus Papier, Polymilchsäurefolie oder Celluloseacetat hergestellt ist.

5. Das granulatförmige Aerosolerzeugungsprodukt nach Anspruch 1, wobei das Außenrohr (5) aus durchlässigen Materialien hergestellt ist, Umgebungsluft durch das Außenrohr (5) in das rillengewellte Bauteil (2), das Aerosolquellenmaterialkörnchen (3) und die Dichtungskomponente (4) eindringen kann.

6. Das granulatförmige Aerosolerzeugungsprodukt nach Anspruch 1, wobei ein erstes Seitenströmungs-Lüftungsloch (51) an dem die Dichtungskomponente (4) umhüllenden Außenrohr (5) bereitgestellt ist, wobei eine Vielzahl von ersten Seitenströmungs-Lüftungslöchern optional ist.

7. Das granulatförmige Aerosolerzeugungsprodukt nach Anspruch 1, wobei ein zweites Seitenströmungs-Lüftungsloch (52) an dem das rillengewellte Bauteil (2) umhüllenden Außenrohr (5) vorgesehen ist, wobei eine Vielzahl zweiten Seitenströmungs-Lüftungslöcher optional ist.

8. Das granulatförmige Aerosolerzeugungsprodukt nach Anspruch 1, wobei die radiale Größe des kleinsten Körnchens des Aerosolquellenmaterialkörnchens (3) größer ist als der längste radiale Abstand in dem ersten Luftströmungskanal (23), so dass das Aerosolquellenmaterialkörnchen (3) nicht durch den ersten Luftströmungskanal (23) in das rillengewellte Bauteil (2) fällt.

## Revendications

1. Produit générateur d'aérosol granulaire de type scellant, le produit comprend un composant filtrant (1), un composant ondulé de rainure (2), un granulé de matériau-source d'aérosol (3) et un composant scellant (4) disposés à tour de rôle de l'extrémité proximale à l'extrémité distale de lèvre, et un tube extérieur (5) est fourni à l'extérieur de chaque composant ;
le composant ondulé de rainure (2) est un cylindre avec une cavité creuse (22) entouré par la première feuille d'une structure ondulée de rainure (21), un premier canal d'écoulement d'air (23) qui pénètre axialement la structure ondulée de rainure (21) se forme entre la structure ondulée de rainure (21) et le tube extérieur (5), une partie de bouchage (24) est fournie à l'intérieur de la cavité creuse (22) ;
le composant scellant (4) est une structure creuse en forme de cône tronquée avec une surface de dessus (41) et une ouverture (42) sur le fond,
dans lequel la partie de bouchage (24) est une bille, et un espace dans la cavité creuse (22) sans remplir la bille forme un deuxième canal d'écoulement d'air (26) ; une taille radiale du plus petit granule du granulé de matériau-source d'aérosol (3) est supérieure à la distance radiale la plus longue dans le deuxième canal d'écoulement d'air (26), de sorte que le granulé de matériau-source d'aérosol (3) ne tombe pas dans le composant ondulé de rainure (2) à travers le deuxième canal d'écoulement d'air (26).

2. Le produit générateur d'aérosol granulaire de la revendication 1, dans lequel la surface de dessus (41) est orientée vers un côté de lèvre proximale ou un côté de lèvre distale ;
l'extrémité distale de lèvre est en amont et l'extrémité proximale de lèvre est en aval, dans lequel l'amont et l'aval étant déterminés par la direction du flux de gaz.

3. Le produit générateur d'aérosol granulaire de la revendication 1, dans lequel un tube intérieur (25) est également disposé à l'intérieur de la cavité creuse (22), et la partie de bouchage (24) est située à l'intérieur du tube intérieur (25).

4. Le produit générateur d'aérosol granulaire de la revendication 1, dans lequel la ou les bille(s) est / sont une ou une pluralité de billes aromatiques ; la première feuille est faite de papier, de feuille d'acide polylactique ou d'acétate de cellulose ; le composant scellant (4) est fait de papier, de feuille d'acide polylactique ou d'acétate de cellulose.

5. Le produit générateur d'aérosol granulaire de la revendication 1, dans lequel le tube extérieur (5) est fait de matériaux perméables, de l'air ambiant peut pénétrer dans le composant ondulé de rainure (2), le granulé de matériau-source d'aérosol (3) et le composant scellant (4) à travers le tube extérieur (5).

6. Le produit générateur d'aérosol granulaire de la revendication 1, dans lequel un premier trou d'évent à écoulement latéral (51) est fourni sur le tube extérieur (5) enroulant le composant scellant (4), une pluralité de premiers trous d'évent à écoulement latéral est facultative.

7. Le produit générateur d'aérosol granulaire de la revendication 1, dans lequel il y a un deuxième trou d'évent à écoulement latéral (52) sur le tube extérieur (5) enroulant le composant ondulé de rainure (2), une pluralité de deuxièmes trous d'évent à écoulement latéral est facultative.

8. Le produit générateur d'aérosol granulaire de la revendication 1, dans lequel la taille radiale du plus petit granule du granulé de matériau-source d'aérosol (3) est supérieure à la plus longue distance radiale dans le premier canal d'écoulement d'air (23), de sorte que le granulé de matériau-source d'aérosol (3) ne tombe pas dans le composant ondulé de rainure (2) à travers le premier canal d'écoulement d'air (23).
